# EUROPÄISCHE PATENTANMELDUNG

(11) **EP 2 993 208 A1**
(43) Veröffentlichungstag der Anmeldung: **09.03.2016**
(21) Anmeldenummer: 14183917.5
(22) Anmeldetag: 08.09.2014
(51) Int. Cl.: C09D 7/12, C09D 5/00

(54) **Lack**

(71) Anmelder: Constantia Flexibles International GmbH, 1200 Wien (AT)
(72) Erfinder: Zuser, Wilhelm, 3202 Hofstetten (AT); Borsky, Karl, 1210 Wien (AT); Nekula, Lambert, 3202 Hofstetten-Grünau (AT)
(74) Vertreter: Patentanwälte Barger, Piso & Partner

(57) **Zusammenfassung**

Die Erfindung betrifft einen Lack, enthaltend eine Gruppe von Flocken gleicher Form und Größe.

Um den damit lackierten Gegenstand zu kennzeichnen, ist vorgesehen, dass die Oberfläche der Flocken durchgehend gleich gefärbt ist. Die Flocken können bevorzugt jeweils kreisförmige, elliptische, dreieckige, quadratische, rechteckige, oder sechseckige Form aufweisen.

In einer Ausgestaltung enthält der Lack zumindest eine zweite Gruppe von Flocken anderer Größe und/oder anderer Form und/oder anderer Farbe.

## Beschreibung

Die Erfindung betrifft einen Lack, der bewirkt, dass damit lackierte Objekte eine Kodierung erhalten, entsprechend dem Oberbegriff des Anspruches 1 und der weiter unten erläuterten EP 1950 256.

Es gibt eine ganze Reihe von Gegenständen, einschließlich von Verpackungen, deren Authentizität überprüfbar sein soll oder muss. Es handelt sich dabei beispielsweise um Geldscheine, Dokumente, Verpackungen oder Begleitdokumente von sicherheitsrelevanten oder gesundheitsrelevanten Waren, wie Waffen, Munition, Pharmazeutika, medizinische Geräte, und vieles mehr.

Die Ursache für diese Notwendigkeit liegt darin, dass es eine stetig größer werdende Zahl von Nachahmen und Plagiatoren gibt, die möglichst ähnlich aussehende und möglichst ähnlich verpackte Produkte auf den Markt bringen und versuchen sie auch in sogenannte geschlossene Verkaufenetze einzuschleusen. Die Ursache dafür ist, dass die Gewinnspannen in den Fällen, in denen eine solche Einschleusung gelingt, ganz enorm sind und entsprechend groß sind die Schäden für die rechtmäßigen Produzenten, von den Gefährdungen für die Betroffenen im Falle von Pharmazeutika und ähnlich sensiblen Gütern gar nicht zu reden.

Es ist daher das Bestreben der rechtmäßigen Produzenten die Produkte und/oder deren Verpackung mit Sicherheitshinweisen zu versehen, durch die einerseits Fälschungen möglichst einfach und sicher nachgewiesen werden können, andererseits bevorzugt auch weitere Informationen über das Produkt erkennbar sind. Ein wesentlicher Aspekt derartiger Sicherheitstechniken liegt darin, dass am Produkt bzw der Verpackung diese aufgebrachten Sicherheitshinweise möglichst nicht feststellbar sein sollen, solange man nicht weiß, was eigentlich gesucht wird. Aus diesem Grund sind auffällige Markierungen wie Hologramme und dergleichen trotz der großen Sicherheiten, die sie gegen ein exaktes Nachbilden darstellen, nicht so sehr geeignet, da natürlich die plagiierten Produkte ebenfalls solche Markierungen tragen, wenn auch bei weitem nicht so elaborierte; so ist es doch so, dass der Unterschied nicht so einfach zu erkennen ist Die Erfindung bezweckt hier Abhilfe zu schaffen und die Sicherheitsmerkmale im Lack für die Produkte bzw. die Verpackung vorzusehen. Dieses Konzept ist in seinem Grund schon bekannt, es wird dazu auf die EP 1 950 256 verwiesen. Diese offenbart, einem Lack eine Vielzahl kleinster flockenförmiger Partikel mit definierter Flächenform zuzusetzen, wobei diese Flocken ein Symbol oder Logo auf einer oder beiden Oberflächen aufweisen. Mit freiem Auge sind die Flocken überhaupt nicht erkennbar, der Lack ist einfach ein Lack. Doch wird es durch diese Maßnahmen möglich, unter dem Mikroskop diese Teilchen und deren Logo zu erkennen und sich so von der Authentizität des Produktes bzw. der Verpackung zu überzeugen.

In einer Ausgestaltung dieser Idee ist vorgesehen, eine Vielzahl weiterer Teilchen mit vorbestimmter Form aber ohne Logo zuzusetzen, die im Wesentlichen dazu dienen, die mit einem Logo versehenen Flocken zu maskieren um eine zufällige Entdeckung durch Plagiatoren zu erschweren.

Diese Vorschläge sind kostspielig, wegen der Notwendigkeit, jede einzelne der Markierungsflocken mit einem Logo zu versehen, und darüber hinaus ist entweder die Auffindbarkeit für Unbefugte einfach, nämlich dann, wenn keine Maskierungsflocken verwendet werden, oder aber es wird die Kontrolle durch die Maskierungsflocken auch für den befugten Kontrolleur schwierig.

Die Erfindung hat das Ziel, hier Abhilfe zu schaffen und einen Lack anzugeben, bei dem man auf einfache und zuverlässige Weise die Authentizität erkennen kann und bei dem darüber hinaus die Möglichkeit besteht, ohne dass die Komplexität und damit die Kosten der Herstellung und der Detektion erhöht werden, verschiedene weitere Informationen verschlüsselt vorzusehen.

Die Erfindung erreicht diese Ziele durch die im kennzeichnenden Teil des Anspruches 1 angegeben Merkmale; mit anderen Worten, es wird im einfachsten Fall eine Gruppe von Flocken mit definierter Form und Größe und Farbe ohne jedes Logo verwendet, die Flocken sind somit durchgehend gefärbt, genauer gesagt, die Oberfläche der Flocken ist durchgehend einheitlich gefärbt (oder einheitlich ungefärbt, was das gleiche Ergebnis bringt). Unter "durchgehend gleich gefärbt" wird in der Beschreibung und den Ansprüchen auch eine Musterung, egal ob auf gewollte Art oder stöchastisch, verstanden, weil es in Erster Linie auf das Vorhandensein einer Gruppe von Flocken gleicher Form und Größe ankommt.

In einer Ausgestaltung werden zumindest zwei Gruppen von Flocken unterschiedlicher Form und/oder Größe verwendet, wobei das Mengenverhältnis eine weitere Aussage über die Authentizität und gegebenenfalls darüber hinaus gehende Informationen aussagt. Andere bzw. weitere Ausgestaltungen sehen die Verwendung von Flocken unterschiedlicher Farbe vor. Da in keinem Fall etwas so komplexes wie eine Figur, ein Text oder ein Logo auf die winzigen Flocken aufgebracht werden muss, sind die Kosten für die Markierung im Vergleich zum Stand der Technik extrem herabgesetzt, und die Erkennung wird dabei noch erleichtert, da auf derartig kleine und schwer erkennbare Merkmale nicht geachtet werden muss.

Es werden erfindungsgemäß kreisförmige, elliptische, dreieckige, quadratische, rechteckige, sechseckige, schneeflockenförmige und unter Umständen auch weitere Flocken mit noch anderem Querschnitt verwendet, wobei, in Kombinationen, auch gleiche Formen, aber unterschiedliche Abmessungen und, wie bereits ausgeführt auch Flocken mit unterschiedlichen Farben verwendet weiden können.

Die Informationen betreffend der Authentizität und auch darüber hinausgehende Informationen, sind nun im einfachsten Fall durch das Vorhandensein oder Fehlen der gesuchten Flocken zu finden, in komplexeren Fällen codieren die Prozentsätze, in denen die einzelnen Flocken und/oder Farben vorliegen, die Information(en). Beim Auszählen unter dem Mikroskop ist es auch beim Überprüfen von nur zwei oder drei Stellen der Oberfläche der Verpackung oder des Objektes möglich, die ausgezählten Flockenarten einem Raster zuzuordnen, wenn die zugegebenen Anteile (z.B. bei Massenangaben oder Farbangaben) stets in beispielsweise 10%-Schritten 10.90; 20:80; ... 80:20; 90:10) erfolgen.

Bei Verwendung unterschiedlicher Größen der Flocken muss darüber hinaus festgelegt sein, ob die angegebenen Prozentsätze der verwendeten Ausgangsmischung der Anzahl oder der Masse (bei gleicher Dicke identisch mit deren Oberfläche) der zugesetzten Flocken entspricht.

Die Information(en) können die Herkunft, das Herstellungsdatum, den Bestimmungsort (Medikamente, Waffen), Sonderausstattungen, Vertriebswege, und vieles andere sein bzw. betreffen.

Die Flocken selbst können in Abhängigkeit vom jeweiligen Anwendungsgebiet eine eher matte Oberfläche aufweisen, oder eine eher reflektierende, auch die Farbe kann, wenn sie nicht zur Codierung herangezogen wird, einfach in Anpassung an die gewünschte Anwendung ausgewählt werden.

Es wurde in der Beschreibung bisher immer einfach von der Oberfläche des Gegenstands bzw. der Verpackung gesprochen, doch ist es selbstverständlich nicht notwendig, dass die gesamte lackierte Oberfläche die Flocken aufweist, es sollte am besten nur ein Teil der Oberfläche sein, der nicht an sich irgendeinen Hinweis drauf gibt, dass es sich hier um eine Prüffläche handelt

Die Flocken selbst können z.B. aus einer PET Folie hergestellt werden, wie es bereits in der mehrfach genannten EP 1 950 256 beschrieben ist, wobei selbstverständlich auf die aufwändige Bedruckung verzichtet wird.

Eine andere Möglichkeit ist die Verwendung beschichteter Polyesterfolie, wie sie beispielsweise von der Sigmund Lindner GmbH in D-95485 Warmensteinach, Deutschland unter der Bezeichnung Siliglit^{®} beispielsweise als 2530-50-1sq Silver angeboten wird. Es handelt sich dabei um Flocken mit einer Größe: von 0,05*0,05mm (=50*50µ / Stärke 12µ die auf verschiedene Weise geschnitten werden kann. Die Beschichtung besteht aus PU, Epoxy, oder ähnlichem.

Ein weiterer Hersteller ist RJA Plastics GmbH in D-07987, Mohlsdorf-Teichwolframsdor Deutschland, der unter der Bezeichnung "Glitter" derartige Flocken in unterschiedlichsten Größen, Dicken und Farben anbietet und auch die zur Herstellung benötigten Maschinen liefert.

Andere Arten von Flocken können neben PET auch aus Polypropylen, Polyethylen, Polystyrol, Polyamiden usw. bestehen. Zum Beispiel können auch metallbedampfte (Vakuummetallisierung) PET-Filme verwendet werden, dabei sind die (z.B.) aufgedampften Aluschichten sehr dünn, bis hinunter zum Bereich von Bruchteilen von Mikrometern (wenige hundert Nanometer). Eine andere Möglichkeit sind Verbundmaterialien wie zum Beispiel ein Verbund aus PET und Aluminium, wegen der höheren Kosten und Dicke eher für Sonderzwecke, aber technologisch durchaus machbar.

Eine weitere Möglichkeit ist die Verwendung von Partikeln aus Blattmetall, einschließlich Blattgold, Alupartikel, bzw. Zinnpartikel, je nach Anwendungsfall kann der Fachmann in Kenntnis der Erfindung seine Wahl leicht treffen.

## Patentansprüche

1. Lack, enthaltend eine Gruppe von Flocken gleicher Form und Größe, **dadurch gekennzeichnet, dass** die Oberfläche der Flocken durchgehend gleich gefärbt ist.

2. Lack nach Anspruch 1, **dadurch gekennzeichnet, dass** er zumindest eine zweite Gruppe von Flocken anderer Größe und/oder anderer Form und/oder anderer Farbe enthält.

3. Lack nach Anspruch 1 oder 2, **dadurch gekennzeichnet, dass** die Flocken einer der Gruppe(n) der Flocken jeweils kreisförmige, elliptische, dreieckige, quadratische, rechteckige, oder sechseckige Form aufweisen.

4. Lack nach einem der Ansprüche 2 oder 3, **dadurch gekennzeichnet, dass** die Mengenverhältnisse der Flocken der einzelnen Gruppen von Flocken zueinander zumindest eine Information betreffend den lackierten Gegenstand codieren.
